Europäisches Patentamt

European Patent Office

Office européen des brevets

(11) Publication number: **0 047 017**
**B1**

## EUROPEAN PATENT SPECIFICATION

(45) Date of publication of patent specification: **07.01.87**

(51) Int. Cl.⁴: **B 62 D 3/12**

(21) Application number: **81106843.6**

(22) Date of filing: **01.09.81**

(54) **Variable ratio rack and pinion steering gear for vehicles.**

(30) Priority: **01.09.80 JP 119825/80**
**16.10.80 JP 143689/80**

(43) Date of publication of application:
**10.03.82 Bulletin 82/10**

(45) Publication of the grant of the patent:
**07.01.87 Bulletin 87/02**

(84) Designated Contracting States:
**DE FR GB**

(56) References cited:
**US-A-2 865 339**
**US-A-3 064 491**
**US-A-3 267 763**

**Patent Abstracts of Japan, vol. 4, no. 94, 8. July 1980, page 84M19**
**Patent Abstracts of Japan, vol. 4, no. 29, 14. March 1980, page 58M2**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Yanai, Tokiyoshi**
**No.4-23-15, Oyabe**
**Yokosuka City (JP)**
Inventor: **Higuchi, Megumu**
**No. 7-3-28-301, Todoroki**
**Setagaya-ku Tokyo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a variable ratio rack and pinion steering gear for vehicles comprising: a circular driving pinion having a plurality of teeth and an axis of rotation and an addendum circle concentric with said axis of rotation, the teeth of the pinion being formed to be correctly meshable with a uniformly toothed rack profile and to provide a variable pitch circle radius, said variable radius having a maximum at a predetermined position of the pinion and gradually reducing in accordance with rotary movement of the pinion in either direction from said predetermined position and having a minimum at 180° of rotary movement from said predetermined position; and a driven rack adapted to mesh with said pinion, the teeth of said rack being formed from a profile of said pinion teeth so as to provide a variable ratio between the pinion and the rack and to include a first group of teeth of variable shape and size, said first group of teeth being adapted to be brought into mesh with said pinion to provide a substantially constant gear ratio when the pinion is at or adjacent said predetermined position and a rapidly varying gear ratio when the operating angle of the pinion is relatively small, as it occurs under high-speed conditions.

A variable rack and pinion steering gear of the afore-mentioned type is disclosed in the JP—A—55—51 665. The rack teeth of said steering gear vary from tooth to tooth, so far as the rack has a central tooth with the largest pressure angle. Thereafter the pressure angle of the teeth gradually reduces towards a certain tooth after which the pressure angle once again starts to increase. The rack teeth of the object of said JP—A—55—51 665 are generated to provide a constant gear ratio at relatively large pinion operating angles. The resulting relation between gear ratio and steering angle shows a slope from about 0° to about 360° and follows thereafter a horizontal line. On the other hand, the variation of gear ratio as a function of steering angle in a steering gear employing a pinion having a varying pitch circle and a rack having standard-form teeth shows a sine curve having a period of 360°. The variation for a steering gear using both a uniform pitchcircle and standard-form rack follows a horizontal line. With the exception of the last-mentioned steering gear, it is to be noted that the manufacture either of the rack or of the pinion is difficult and costly.

Furthermore, a variable steering gear has become known by US—A—3064 491 which is adapted to provide a constant pitch circle during rotary movement exceeding 90° in either direction from a predetermined position.

With a view to the prior art, it is an object of the present invention to provide an improved variable ratio rack and pinion steering gear which is free from the foregoing drawbacks inherent in prior art rack and pinion steering gears of the afore-mentioned type.

It is further object of the present invention to provide an improved variable ratio rack and pinion steering gear of the above-mentioned character which is enabled to have a wider variation of gear ratio without sacrificing the strength or rigidity of the steering gear, particularly the rack teeth.

In a variable rack and pinion steering gear of the above-mentioned type, these objects are attained in that said rack further includes a second group of teeth of uniform shape and size which are brought into mesh with said pinion when the operating angle of the pinion is relatively large, as it occurs under low-speed turning or standstill conditions.

According to such an arrangement the ratio characteristics is made to approach to the desired characteristics. ·

The features and advantages of the variable ratio rack and pinion steering gear according to the present invention will become more clearly appreciated from the following description taken in conjunction with the accompanying drawings, in which:

Fig. 1 shows a variable ratio rack and pinion steering gear embodying the present invention;

Fig. 2 shows a pinion constructed in accordance with the present invention and a uniformly toothed rack profile;

Figs. 3 and 4 show modifications of the present invention;

Figs. 5 and 6 show two variable ratio characteristics of rack and pinion steering gears constructed in accordance with the present invention.

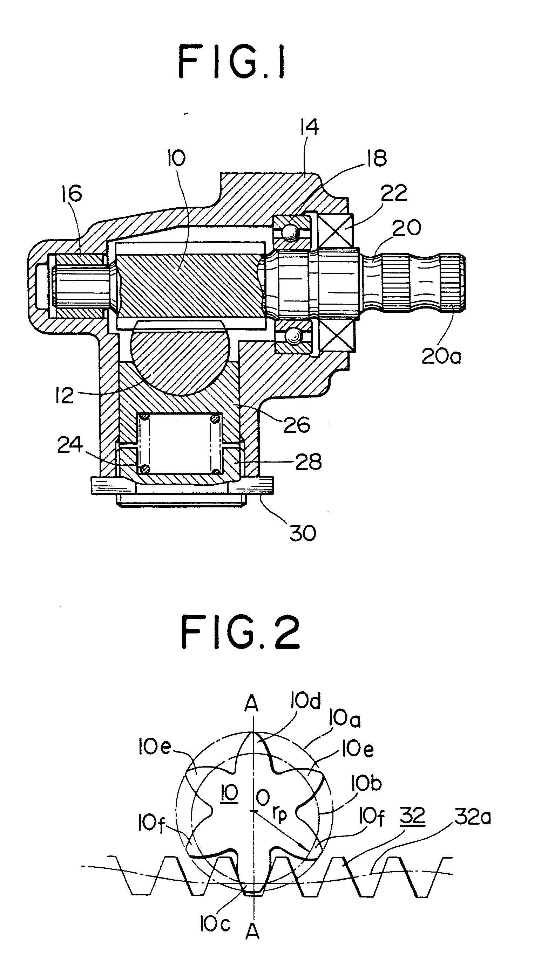

Referring first to Fig. 1, a variable ratio rack and pinion steering gear for an automotive vehicle is shown to comprise a pinion 10 and a rack 12. The pinion 10 is rotatably supported in a gear casing 14 through bearings 16 and 18. The rack 12 is in mesh with the pinion 10 and axially movable in the gear casing 14 in accordance with the rotary movement of the pinion 10. A pinion shaft 20 is provided with serrations 20a and adapted to be connected to, though not shown, a steering shaft which is, in turn connected to a steering wheel. A sealing member 22 is arranged to provide a seal between the pinion shaft 20 and the gear casing 14. The rack 12 has its opposite ends projecting from the gear casing 14 and adapted to be connected at the opposite ends to steerable road wheels of the vehicle. A spring 24 is arranged to urge the rack 12 against the pinion 10 by way of a retainer 26, and its intensity is adjustable by advancing or retreating an adjusting nut 28. The nut 28 is locked at a set position by means of a lock nut 30 after the adjustment of the intensity of the spring 24.

The above structure substantially follows the conventional fashion. To produce a desired variable ratio relationship the pinion 10 and the rack 12 are constructed and arranged as will be described hereinbelow.

Fig. 2 shows the tooth profile of the pinion 10, which is a circular gear having an addendum circle 10a concentric with the center 0 of rotation of the pinion. The teeth of the pinion 10 are of

variable shape and size and correctly meshable with a uniformly toothed rack profile 32. The rack tooth profile 32 is uniform in shape and size and preferably a standard rack tooth profile as illustrated. The pinion 10 is adapted to provide varying pitch circles and more specifically adapted to provide an effective pitch circle radius $r_p$ which is a maximum at a central or datum position of the pinion or when the operating angle of the pinion is zero, reduces gradually with the rotary movement of the pinion in either direction out of the datum position and is at a minimum when the operating angle of the pinion out of the datum position is 180°. The datum position of the pinion 10 is aligned with the straight-ahead position of the steering wheel. The pinion 10 is therefore given an intermeshing pitch line or curve 10b which is symmetrical about the axis A—A aligned with the datum position of the pinion. More specifically, the pinion 10 is shown to comprise six teeth including diametrically opposed first and second teeth 10c and 10d. The first pinion tooth 10c is symmetrical about the axis A—A and adapted to provide a maximum pitch circle radius at the middle point thereof, whilst the second pinion tooth 10d is also symmetrical about the axis A—A and adapted to provide a minimum pitch circle radius at the middle point thereof. The remaining two pairs of teeth 10e and 10f on the respective sides of the axis A—A of symmetry are adapted to provide a gradually reducing pitch circle radius as the pinion rotates progressively in either direction out of the datum position thereof. Each of the pinion teeth 10e and 10f does not have a symmetrical profile. The pinion 10 is generated by using a hob or cutter having blades of the same tooth form as the uniformly toothed rack profile 32 which is preferably a standard rack tooth profile as shown in Fig. 2.

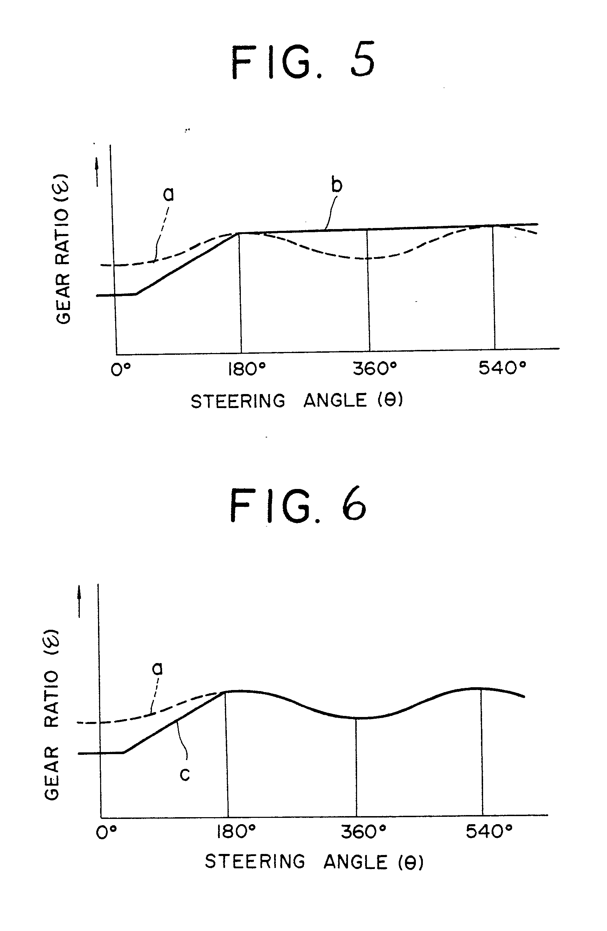

In the variable ratio rack and pinion steering gear according to the present invention, the pinion 10 constructed in the above manner is used, and the gear ratio is adapted to vary as the position of meshing engagement of the pinion 10 and the rack 12 changes with the rotary movement of the steering wheel. However, when the teeth of the rack 12 are constructed to be of uniform shape and size as, for example, of the standard rack tooth profile 32, the resulting variable ratio characteristics of the rack and pinion steering gear will become such one as represented by a dotted line "a" in the graph of Fig. 5. That is, the resulting ratio characteristics are represented by the undulating or waved line "a" in the graph of Fig. 5 which undulates in cycles in the way of completing one cycle per one revolution of the pinion 10 in response to the rotation 0 of the steering wheel.

The variable ratio characteristics of rack and pinion steering gear normally considered desirable are, however, such one as represented by a solid line "b" in the graph of Fig. 5. That is, when the steering angle 0 is smaller than 180°, a relatively small gear ratio is desired for the purpose of obtaining a highspeed stability, whereas when the steering angle 0 is larger than 180°, a relatively large gear ratio is desired for the purpose of obtaining a light and smooth feel in steering operation under low-speed turning or standstill conditions.

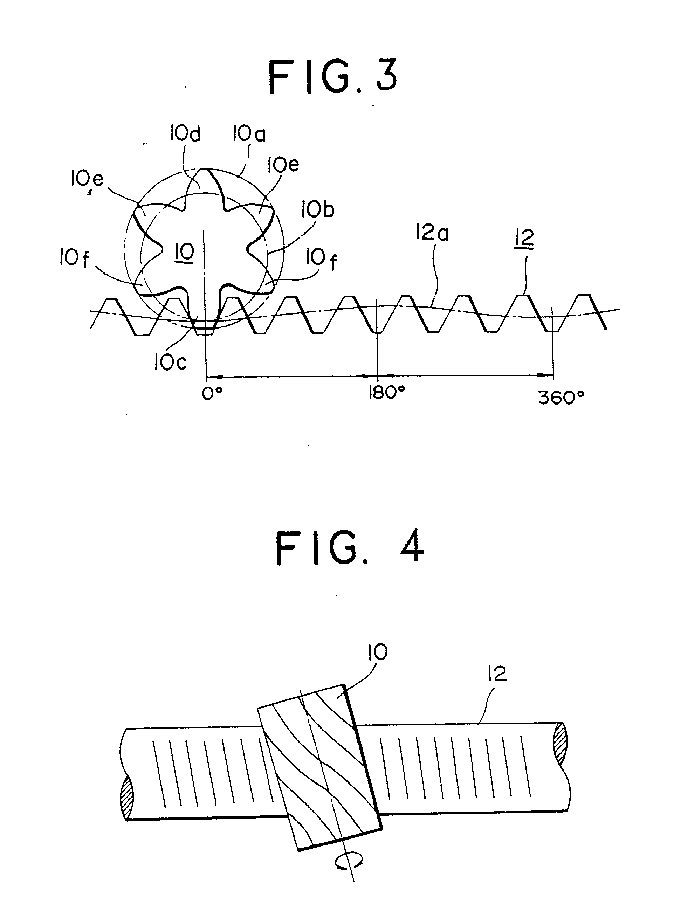

To achieve such desired variable ratio characteristics the rack 12 used in the rack and pinion steering gear of the present invention is constructed to have such a tooth profile as shown in Fig. 3. Here, the teeth of the rack 12 at the region corresponding to the steering angle of more than 180° are constructed to have a standard rack tooth profile as the profile 32. With the above structure, the ratio characteristics represented by a solid line "c" in the graph of Fig. 6 results and wherein while the portion of the line "c" corresponding to the steering angle of less than 180° is adapted to conform to the desired characteristics line "b", the portion of the line "c" corresponding to the steering angle of more than 180° is not adapted to conform to the line "b" but to the line "a", thus slightly deviates from the desired ratio characteristics. However, since such deviation occurs at the region for a relatively high gear ratio and further since the amount of deviation is relatively small, no substantial problems occur in practical use but a considerable reduction in steering effort can be obtained.

In the embodiment of Fig. 3, since the profile of the rack 12 teeth differs only at the region near the midpoint from the standard rack tooth profile 32 but is, at the remaining regions, a standard rack tooth profile itself, this embodiment of Fig. 3 enables to realize the solution of the foregoing problems in the prior art more completely and assuredly. Furthermore, the rack 12 in this embodiment can be produced more easily and therefore is inexpensive in manufacturing cost.

According to the invention, the pinion 10 is preferably constructed to be a helical pinion as shown in Fig. 4, whilst the rack 12 is constructed to have correspondingly oblique teeth, whereby the number of teeth of the rack and pinion brought into meshing engagement at the same time is increased, thus enabling smooth mesh even when the rack and pinion is constructed to provide a considerably wide variation of gear ratio.

**Claims**

1. A variable ratio rack and pinion steering gear for vehicles comprising: a circular driving pinion (10) having a plurality of teeth and an axis of rotation and an addendum circle concentric with said axis of rotation, the teeth of the pinion being formed to be correctly meshable with a uniformly toothed rack profile and to provide a variable pitch circle radius, said variable radius having a maximum at a predetermined position of the pinion and gradually reducing in accordance with rotary movement of the pinion in either direction from said predetermined position and having a minimum at 180° of rotary movement from said predetermined position; and a driven rack (12) adapted to mesh with said pinion, the teeth of said rack being formed from a profile of said pinion teeth so as to provide a variable ratio between the pinion and the rack and to include a first group of teeth of variable shape and size, said first group of teeth being adapted to be brought into mesh with said pinion to provide a substantially constant gear ratio when the pinion is at or adjacent said predetermined position and a rapidly varying gear ratio when the operating angle of the pinion is relatively small as it occurs under high-speed conditions, characterized in that said rack (12) further includes a second group of teeth (32) of uniform shape and size which are brought into mesh with said pinion (10) when the operating angle of the pinion is relatively large, as it occurs under low-speed turning or standstill conditions.

2. A variable ratio rack and pinion steering gear as set forth in claim 1, characterized in that said pinion (10) further has an intermeshing pitch curve (10b) symmetrical about an axis (A—A) of symmetry, said axis of symmetry being aligned with said predetermined position of the pinion.

3. A variable ratio rack and pinion steering gear as set forth in claim 1, characterized in that said uniformly toothed rack profile (32) comprises a standard rack tooth profile.

4. A variable ratio rack and pinion steering gear as set forth in claim 1, characterized in that said first group of teeth are adapted to mesh with said pinion (10) when an operating angle of the pinion is between said predetermined position and 180° from said predetermined position, and said second group of teeth (32) are adapted to mesh with said pinion when the operating angle of said pinion is more than 180° from said predetermined position.

5. A variable ratio rack and pinion steering gear as set forth in claim 4, wherein said second group of rack teeth (32) have a standard rack tooth profile.

6. A variable ratio rack and pinion steering gear as set forth in claim 1, wherein said pinion (10) comprises a helical pinion.

**Revendications**

1. Boîte de direction à crémaillère et pignon de rapport variable pour véhicule comprenant: un pignon d'entraînement circulaire (10) ayant un certain nombre de dents et un axe de rotation et une ligne de couronne concentrique avec ledit axe de rotation, les dents du pignon étant formées pour être engrenées correctement avec un profil de crémaillère uniformément denté et pour fournir un rayon de ligne d'engrènement variable, ledit rayon variable ayant un maximum à une position prédéterminée du pignon et diminuant graduellement selon le mouvement rotatoire du pignon dans chaque direction à partir de ladite position prédéterminée et ayant un minimum à 180° du mouvement rotatoire à partir de ladite position prédéterminée; et une crémaillère menée (12) adaptée pour s'engrener avec ledit pignon, les dents de ladite crémaillère étant formées à partir d'un profil des dents dudit pignon de façon à obtenir un rapport variable entre le pignon et la crémaillère et à inclure un premier groupe de dents de taille et forme variables, ledit premier groupe de dents étant adapté pour être introduit en prise avec ledit pignon afin d'assurer un rapport d'engrenage substantiallement constant quand le pignon est à ou adjacent à ladite position prédéterminée et un rapport d'engrenage variant rapidement quand l'angle de fonctionnement du pignon est relativement petit comme il arrive sous conditions de vitesse élevée, caractérisée en ce que ladite crémaillère (12) comprend de plus un second groupe de dents (32) de taille et de forme uniformes qui sont introduites en prise avec ledit pignon (10) quand l'angle de fonctionnement du pignon est relativement important, comme il arrive dans des conditions d'immobilisation ou de changement basse vitesse.

2. Boîte de direction à crémaillère et pignon de rapport variable selon la revendication 1, caractérisée en ce que ledit pignon (10) a de plus une courbe d'engrènement réciproque (10b) symétrique par rapport à un axe (A—A) de symétrie, ledit axe de symétrie étant aligné avec ladite position prédéterminée du pignon.

3. Boîte de direction à crémaillère et pignon de rapport variable selon la revendication 1, caractérisée en ce que le profil de la crémaillère uniformément denté (32) comprend un profil à dent de crémaillère standard.

4. Boîte de direction à pignon et crémaillère de rapport variable selon la revendication 1, caractérisée en ce que ledit premier groupe de dents sont adaptées pour s'engrener avec ledit pignon (10) quand un angle de fonctionnement du pignon est entre ladite position prédéterminée et 180° à partir de la position prédéterminée, et ledit second groupe de dents (32) sont adaptées pour s'engrener avec ledit pignon quand l'angle de fonctionnement dudit pignon est plus grand que 180° à partir de ladite position prédéterminée.

5. Boîte de direction à pignon et crémaillère de rapport variable selon la revendication 4, dans laquelle ledit second groupe de dents de crémaillère (32) ont un profil de dent de crémaillère standard.

6. Boîte de direction à pignon et crémaillère de rapport variable selon la revendication 1, dans laquelle ledit pignon (10) comprend un pignon hélicoïdal.

**Patentansprüche**

1. Zahnstangen-Lenkgetriebe mit variablem Übertragungsverhältnis für Fahrzeuge, umfassend ein kreisförmiges Antriebsritzel (10) mit einer Anzahl von Zähnen und einer Drehachse sowie einem mit der Drehachse konzentrischen Kopfkreis, wobei die Zähne des Ritzels so geformt sind, daß sie in korrekten Eingriff mit einem gleichmäßig gezehnten Zahnstangenprofil bringbar sind und dabei einen Eingriffskreis mit variablem Radius bilden, wobei der variable Radius in einer vorbestimmten Stellung des Ritzels ein Maximum hat und sich abhängig von der Drehung des Ritzels in beiden Richtungen aus der vorbestimmten Stellung verringert und ein Minimum bei einer Drehung um 180° aus der vorbestimmten Stellung aufweist; und eine in Eingriff mit dem Ritzel bringbare angetriebene Zahnstange (12), wobei die Zähne der Zahnstange aus einem Profil der Ritzelzähne entwickelt sind, um ein variables Übertragungsverhältnis zwischen dem Ritzel und der Zahnstange zu erhalten, und eine erste Gruppe von Zähnen von variabler Form und Größe umfassen, wobei die erste Gruppe der Zähne mit dem Ritzel in Eingriff bringbar sind, um ein im wesentlichen konstantes Übertragungsverhältnis zu erhalten, wenn sich das Ritzel in oder nahe der vorbestimmten Stellung befindet, und ein sich schnell änderndes Übertragungsverhältnis, wenn der Betätigungswinkel des Ritzels relativ klein ist, wie dies unter Bedingungen hoher Geschwindigkeit der Fall ist, dadurch gekennzeichnet, daß die Zahnstange (12) ferner eine zweite Gruppe von Zähnen (32) von Gleichmäßiger Form und Größe aufweist, welche mit dem Ritzel (10) in Eingriff gebracht werden, wenn der Betätigungswinkel des Ritzels relativ groß ist, wie dies beim Wenden mit niedriger Geschwindigkeit oder im Stillstand vorkommt.

2. Zahnstangen-Lenkgetriebe mit variablem Übertragungsverhältnis nach Anspruch 1, dadurch gekennzeichnet, daß das Ritzel (10) ferner eine Flanken-Eingriffskurve (10b) aufweist, welche in bezug auf eine Symmetrieachse symmetrisch ist, und daß die Symmetrieachse sich in Ausrichtung mit der vorbestimmten Stellung des Ritzels erstreckt.

3. Zahnstangen-Lenkgetriebe mit variablem Übertragungsverhältnis nach Anspruch 1, dadurch gekennzeichnet, daß das gleichmäßig gezahnte Zahnstangenprofil (32) ein Zahnstangen-Normzahnprofil aufweist.

4. Zahnstangen-Lenkgetriebe mit variablem Übertragungsverhältnis nach Anspruch 1, dadurch gekennzechnet, daß die erste Gruppe von Zähnen mit dem Ritzel (10) in Eingriff bringbar ist, wenn ein Betätigungswinkel des Ritzels zwischen der vorbestimmten Stellung und einer gegenüber dieser um 180° verdrehten Stellung liegt, und daß die zweite Gruppe der Zähne (32) mit dem Ritzel in Eingriff bringbar ist, wenn der Betätigungswinkel des Ritzels um mehr als 180° von der vorbestimmten Stellung entfernt ist.

5. Zahnstangen-Lenkgetriebe mit variablem Übertragungsverhältnis nach Anspruch 4, bei welchem die zweite Gruppe der Zahnstangenzähne (32) ein Zahnstangen-Normzahnprofil aufweist.

6. Zahnstangen-Lenkgetriebe mit variablem Übertragungsverhältnis nach Anspruch 1, bei welchem das Ritzel (10) ein Schneckenritzel ist.

# FIG.1

# FIG.2

# FIG. 3

# FIG. 4

2

# FIG. 5

# FIG. 6